# DEMANDE DE BREVET EUROPEEN

(11) **EP 1 460 546 A1**
(43) Date de publication de la demande: **22.09.2004**
(21) Numéro de dépôt: 03290688.5
(22) Date de dépôt: 18.03.2003
(51) Int. Cl.: G06F 11/28

(54) **Procédé de sécurisation de l'exécution d'un programme dans un ensemble électronique contre les attaques par introduction d'erreurs**

(71) Demandeur: SCHLUMBERGER Systèmes, 92120 Montrouge (FR)
(72) Inventeur: Akkar, Mehdi-Laurent, 94250 Gentilly (FR); Ly, Olivier Thanh-Khiêt, 92100 Boulogne Billancourt (FR); Goubin, Louis, 75015 Paris (FR)
(74) Mandataire: Renault, Patricia

(57) **Abrégé**

L'invention concerne un procédé automatique de sécurisation d'un ensemble électronique de calcul contre les attaques par introduction d'erreur ou par rayonnement.
L'on utilise
1. Des informations statiques générées par le procédé automatique.
2. Une partie dynamique de la mémoire du système électronique allouée par le procédé automatique.
3. Des balises et des points de contrôles pour jalonner le code, introduits par le procédé automatique.
4.Des fonctions de balises stockant des informations dans la mémoire dynamique.
5.Des fonctions de vérification d'historique utilisant les informations statiques et la mémoire dynamique pour vérifier qu'aucune erreur n'a été introduite.

## Description

La présente invention concerne un procédé de sécurisation d'un ensemble électronique mettant en oeuvre un algorithme quelconque où il est nécessaire de vérifier que le déroulement de l'algorithme a été effectué sans erreurs, que ce soit pour les étapes intermédiaires des différentes fonctions (déroulement du code, boucles, tests ...)ou pour les appels entre fonctions. Plus précisément, le procédé vise à réaliser une version de l'implémentation qui ne soit pas vulnérable face à un certain type d'attaques par introduction d'une ou plusieurs erreurs - dites « *Fault Analysis »* ou *« Extended Fault Analysis* » - qui cherchent à obtenir des informations sur une ou plusieurs données ou opérations intervenant dans le calcul à partir de l'étude du déroulement des calculs de l'ensemble électronique lorsqu'une ou plusieurs erreurs sont introduites.

La présente invention couvre toutes les implémentations où il est nécessaire de s'assurer que toutes les étapes intervenant lors du calcul ont été effectuées sans erreurs.
La première apparition de telles attaques date de 1996 :
- Ref (0): New Threat Model Breaks Crypto Codes - D. Boneh, R. DeMillo, R. Lipton - Bellcore Press Release

Le procédé vise également à proposer une parade aux attaques par rayonnement, flash, lumière, laser, glitch ou autres ou plus généralement à toute attaque perturbant l'exécution des instructions du programme dite attaque par perturbation. De telles attaques ont pour conséquence de modifier des instructions à exécuter et pour résultat l'inexécution ou la mauvaise exécution de certaines parties du programme.

Le procédé, objet de la présente invention, a pour objet la suppression des risques d'attaques par perturbation ou d'attaques par injection de faute d'ensembles ou systèmes électroniques en modifiant les fonctions qui interviennent lors du calcul.

Le procédé de sécurisation d'un ensemble électronique mettant en oeuvre un processus de calcul classique qui doit être sans erreur, objet de la présente invention, est remarquable en ce que l'on modifie les fonctions mises en oeuvres dans le calcul en y ajoutant en plusieurs endroits et ce de manière automatique :
- Une allocation de mémoire dynamique
- De l'information statique.
- Des objets de contrôles appelés « Balises » et « Points de contrôle ».
- Des appels à des fonctions dites « de balises » et « de vérification d'historique» qui de plus utiliseront la mémoire dynamique et statique.

Le procédé utilise le graphe de flot de contrôle du programme à protéger afin de générer les informations statiques utilisées par les fonctions de vérification.

La balise est une information qui définit les caractéristiques du point de passage correspondant et/ou d'un ou plusieurs autres points de passage.

Selon une forme de réalisation de l'invention, la balise est un nombre entier localisant la balise dans le code à protéger.

Selon une autre forme de réalisation, la balise est un booléen définissant s'il s'agit de la première ou de la dernière balise.

Selon une forme particulière de l'invention, la balise est une structure de donnée caractérisant, en fonction de la valeur d'un registre ou d'une variable donnée, l'ensemble des balises dont on interdira (par une fonction de vérification) le passage dans la suite du déroulement de l'exécution.

Selon une autre forme de réalisation particulière de l'invention, la balise est une structure de donnée caractérisant, en fonction de la valeur d'un registre ou d'une variable donnée, l'ensemble des balises dont on forcera (par une fonction de vérification) le passage dans la suite du déroulement de l'exécution.

Les formes de réalisation citées peuvent être combinées : la balise peut être constituée de plusieurs des éléments décrits précédemment.

Les fonctions de balises et de vérifications utilisent une partie partagée de la mémoire du système.

La mémoire partagée contient une structure de donnée de type pile, de type tableau de booléens et/ou de type nombre stockant une somme de contrôle.

Une fonction de balise est une fonction qui est appelée par le programme à chaque passage par une balise et qui consiste à stocker dynamiquement dans la mémoire partagée diverses informations concernant la balise, et éventuellement à effectuer un contrôle sur le déroulement de l'exécution.

Selon une forme de réalisation particulière de l'invention, la fonction de balise est une fonction qui empile la balise dans la mémoire partagée.

Selon une autre forme de réalisation, la fonction de balise est une fonction qui met à jour une somme de contrôle contenue dans la mémoire partagée avec des données de la balise.

Lesdites formes de réalisation peuvent être combinées.

Une fonction de vérification d'historique est une fonction appelée à chaque point de contrôle afin de vérifier la cohérence des informations stockées dans la mémoire partagée lors des appels successifs des fonctions de balises.

La mémoire statique calculé par le processus automatique est une liste de pile de balises représentant un historique valide de p assage d e balises e t/ou une liste de sommes de contrôle obtenues à partir d'un historique valide de passage de balises.

Dans le cas d'une somme de contrôle, la somme de contrôle est obtenu par l'utilisation de la fonction addition, par l'utilisation de la fonction Ou exclusif (ou XOR), par l'utilisation d'un checksum usuel et/ou par l'utilisation d'une fonction cryptographique de hachage.

Les objets « Balise » et « Point de contrôle », les fonctions « Fonction de Balises » et « Fonction de Vérification d'historique » ainsi que la mémoire partagée seront décrites de manière générique par la suite et des exemples seront également donnés.

### DESCRIPTION SOMMAIRE DES DESSINS

D'autres buts, avantages et caractéristiques de l'invention apparaîtront à la lecture d e la description qui va suivre de la mise en oeuvre du procédé selon l'invention et d'un mode de réalisation d'un ensemble électronique adapté pour cette mise en oeuvre, donnés à titre d'exemple non limitatif en référence aux dessins ci-annexés dans lesquels :
- la figure 1 montre une représentation schématique d'un mode de réalisation d'un module électronique selon la présente invention ;
- la figure 2 montre un graphe représentant des étapes du procédé selon la présente invention.

### MANIERE DE REALISER L'INVENTION

Le procédé selon l'invention vise à sécuriser un ensemble électronique, et par exemple un système embarqué tel qu'une carte à puce mettant en oeuvre un programme. L'ensemble électronique comprend au moins un processeur et une mémoire. Le programme à sécuriser est installé dans la mémoire, par exemple de type ROM dudit ensemble.

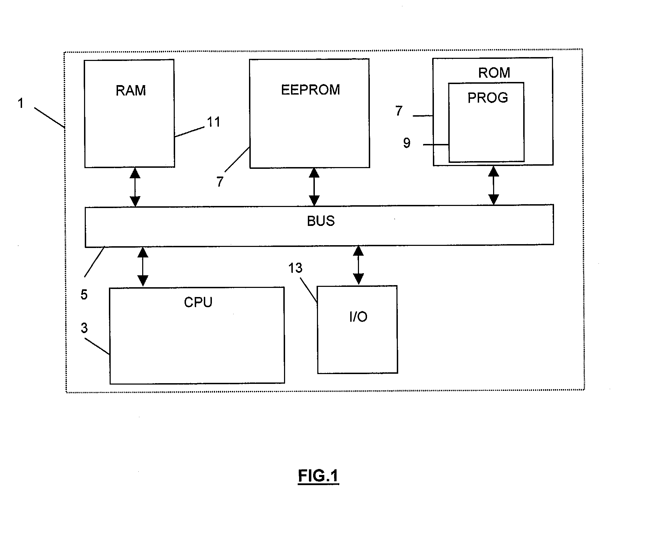

A t itre d'exemple non limitatif, l'ensemble électronique d écrit dans ce qui suit correspond à un système embarqué comprenant un module électronique 1 illustré sur la figure 1. De tels modules sont réalisés le plus souvent sous la forme d'un microcircuit électronique i ntégré m onolithique, ou puce, qui une fois protégé physiquement par tout moyen connu peut être monté sur un objet portatif tel que par exemple une carte à puce, carte à microcircuit ou autre utilisable dans divers domaines.

Le module électronique 1 à microprocesseur comprend un microprocesseur CPU 3 relié de façon bidirectionnelle par un bus 5 interne à une mémoire 7 non volatile de type ROM, EEPROM, Flash, FeRam ou autre contenant le programme PROG 9 à exécuter, une mémoire 11 vive de type RAM, des moyens 13 I/O d'entrée/sortie pour communiquer avec l'extérieur.

### 1. PRINCIPE

### 1.1 Balises et fonction de balises

### Définition

- Une balise sera une information qui définira les caractéristiques du point de passage.
- Une fonction de balises sera une fonction qui sera appelée par le programme à chaque passage par une balise et qui consistera à stocker dans la mémoire partagée diverses informations concernant la balise et éventuellement à effectuer un contrôle sur le déroulement de l'exécution.

### Exemples

Une balise pourra par exemple être :
- Un nombre entier qui permet de connaître la localisation de la dites balise ou bien un booléen définissant s'il s'agit de la première ou de la dernière balise par exemple.
- Une structure complexe décrivant un ensemble d'information concernant l'état actuel d u dispositif électronique exécutant le c ode. Par exemple, une structure de données caractérisant, en fonction de la valeur d'un registre ou d'une variable donnée, l'ensemble des balises dont on interdira (par la fonction de balise ou celle de vérification) le passage dans la suite du déroulement de l'exécution.

Une fonction de balises pourra par exemple effectuer les opérations suivantes :
- Regarder si la balise est la première balise (à l'aide d'un champ spécifique à la balise). Si oui créer une pile vide en mémoire partagée, empiler la balise et continuer le code, sinon empiler la balise dans la pile et continuer l'exécution du code.

### 1.2 Points de contrôle, Vérification d'historique

### Définition

- Un point de contrôle sera une structure de donnée contenant des informations qui seront utilisées par la fonction de vérification d'historique.
- La fonction de vérification d'historique est une fonction appelée à chaque point de contrôle afin de vérifier la cohérence des informations stockées dans la mémoire partagée lors des appels successifs des fonctions de balises.

### Exemples

- Un point de contrôle peut être constitué de toutes les listes de balises correspondant à des déroulements d'exécution autorisés aboutissant à ce point de contrôle.
- La fonction de vérification pourra être la vérification que la pile des balises traversées correspond à une des listes du point de contrôle. Si tel n'est pas le cas une erreur est détectée.

### 2. FORME DE REALISATION

Nous décrivons ici à t itre d'exemple le fonctionnement d'un p réprocesseur de code C qui implante la détection d'erreur de façon semi-automatique.

Le préprocesseur accepte comme entrée du code source C, et transforme ce code pour y inclure la détection d'erreur.

Cette transformation est guidée par des directives incluses dans le code qui spécifient les balises qui doivent être introduites. Ces directives peuvent prendre les formes suivantes:
1.start : cette directive spécifie que la pile des balises successivement traversées doit être vidée.
2.flag : cette directive spécifie l'introduction d'une nouvelle balise qui doit être empilée à chaque passage.
3.verify : cette directive spécifie l'introduction d'un point de contrôle qui provoquera, à chaque fois qu'il sera traversé, la vérification que l'ensemble des balises empilées correspond à un déroulement d'execution admissible.
4.race n cond : cette directive spécifie l'introduction d'une balise qui indique lorsqu'elle est traversée que si l'expression booléenne cond est vraie, alors seuls les déroulements d'execution de la famille n sont admissibles. Une telle famille est définie par l'ensemble des directives du type suivant.
5. flag In1 ... !nk m1 ... mk : cette directive spécifie que les déroulements d'exécution des familles n1...nk ne doivent pas passer par ce point, et que les déroulements d'execution des familles m1...mk doivent passer par ce point.
6.Loop n : cette directive spécifie l'entrée dans une boucle dont le nombre de tour est n.

On donne ici un un exmple en langage C comportant des directives à l'attention du préprocesseur. La fonction int f(int x, int d) effectue action1 (d) trois fois, puis action2(d) si x est égal à 1. La fonction action2(int d) effectue action21 (d) puis action22(d).

Les directives sont placées dans le code sous forme de #pragma. Leurs effets sont indiqués en commentaire.

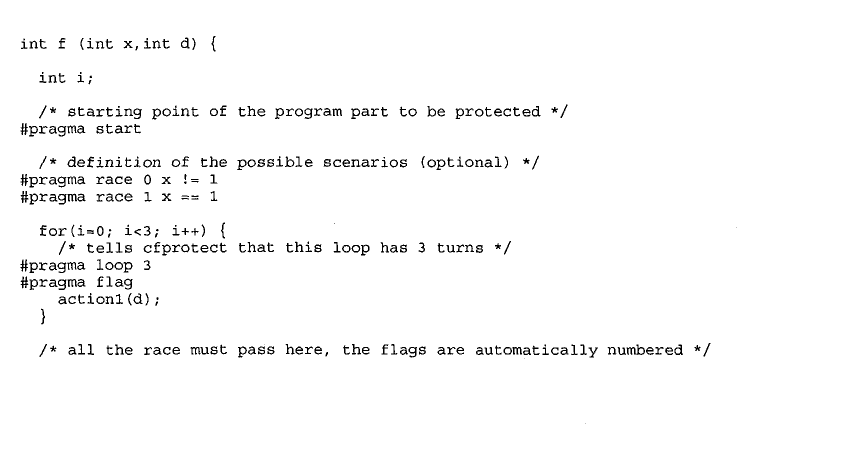

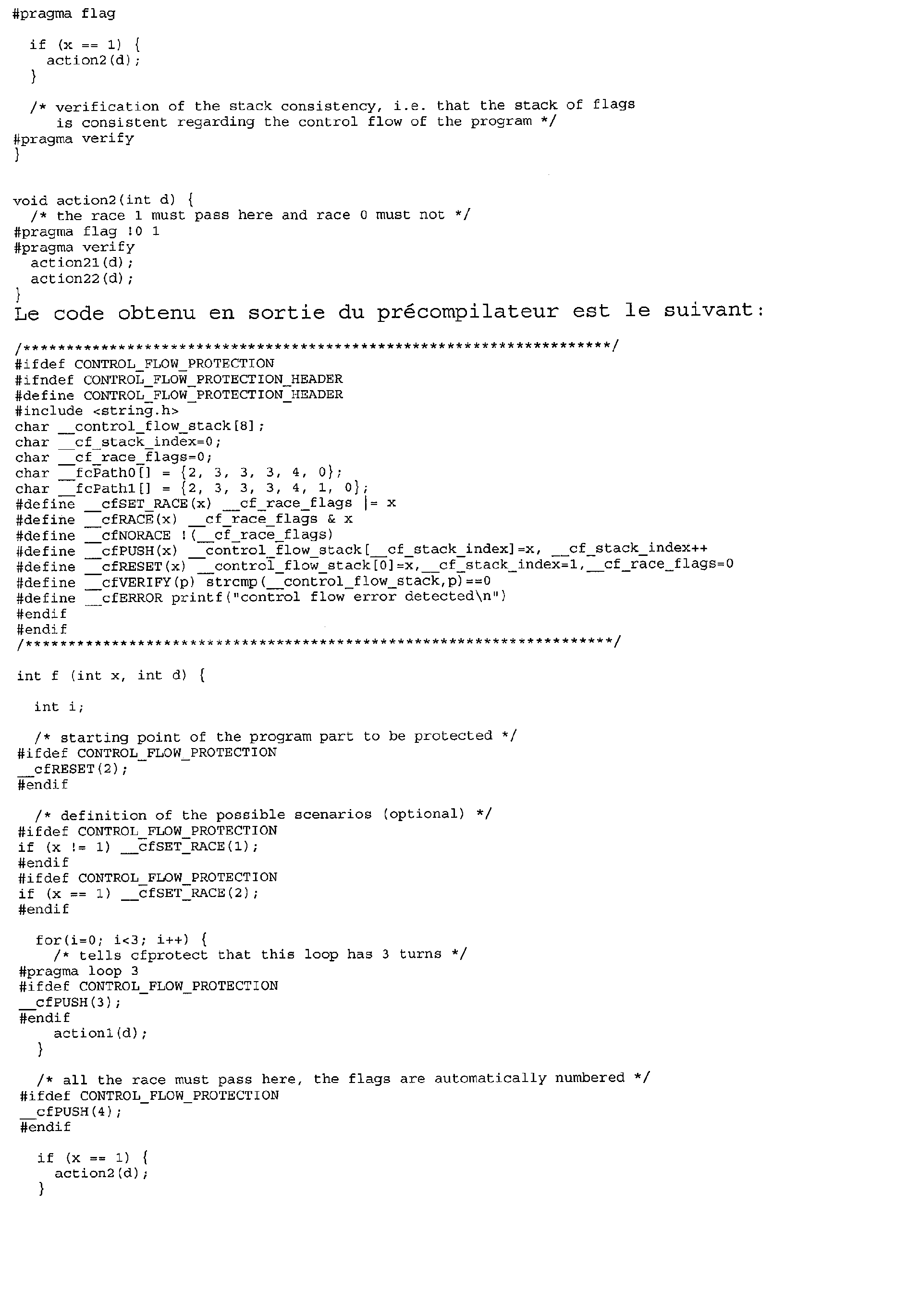

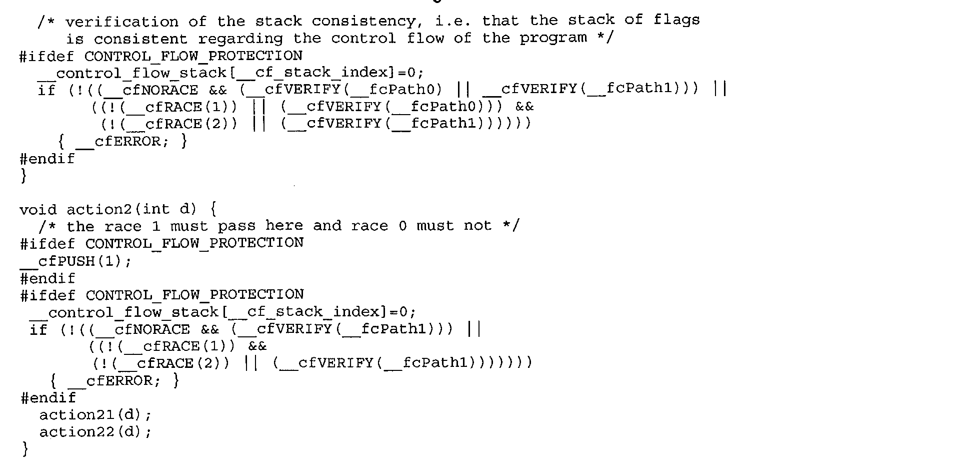

Le précompilateur définit des structures de données utilisées pour la vérification.
Ces structures de données se divisent en deux types: statiques et dynamiques.
Les structures de données dynamiques sont:
1. Un tableau d'octets destiné à stocker la pile de balises successivement traversées au fur et à mesure de l'exécution du programme.
2. Un octet indiquant la taille de la pile.
3. Un octet désignant les familles de chemins admissibles.

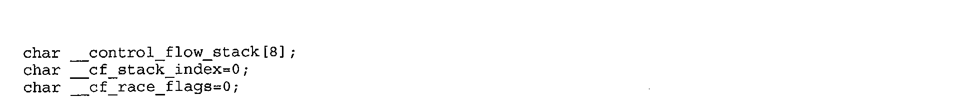

Les données statiques décrivent les piles de balises admissibles; dans notre cas:

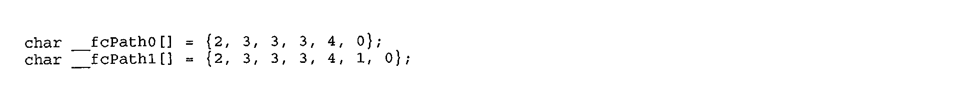

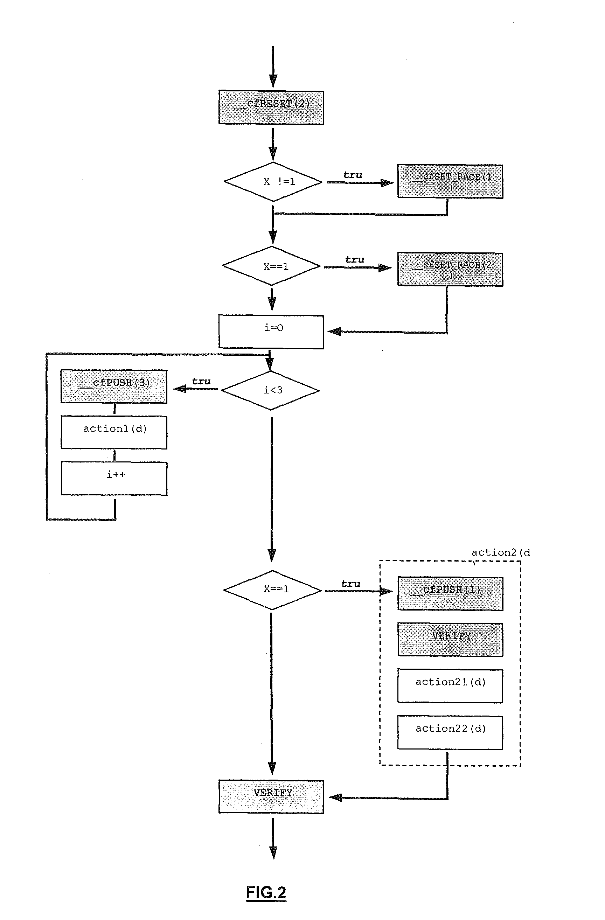

Ces données sont calculées par le préprocesseur à partir du graphes de flôt de contrôle du programme, calculé également par le préprocesseur (voir figure 2). L'analyse de ce graphe indique quelles sont les suites de balises correspondant effectivement à un déroulement d'execution menant d'une balise d'initialisation à une balise de vérification.

Le précompilateur définit également un ensemble de fonctions, en fait des macros C, utilisées lors les passages de balises. Ces fonctions sont les suivantes: 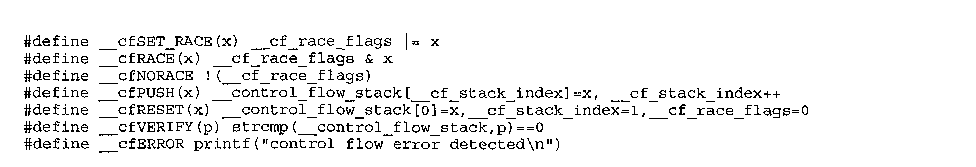
1._cfSET_RACE(x) est u tilisées p our indiquer que la famille de déroulement d'execution codée par x est admissible.
2._cfRACE(x) teste si la famille codée par x a été effectivement activée, dans ce cas, seul les déroulement d'execution de cette famille sont admis.
3._cfNORACE indique qu'aucune famille n'a été activée, dans ce cas, tout déroulement d'exécution cohérent avec le graphe de flôt de contrôle est admissible.
4._cfPUSH(x) empile la balise x; le précompilateur assigne à chaque balise start ou flag un identificateur unique.
5._cfRESET(x) vide la pile de balises.
6._cfVERIFY(p)compare la pile de balises avec u n tableau représentant une pile admissible (l'un des tableaux statiques précalculés).
7._cfERROR inque la procedure à executer en cas de détection d'erreur.

Ces fonctions sont utilisées pour implanter la détection d'erreur:
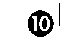 Une directive start est remplacée par une balise d'initialisation codée par _cfRESET(x) où x est le symbole attribué à la balise en question.
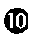 Une directive flag ... est replacée par par une balise codée par _cfPUSH(x) où x est le symbole attribué à la balise en question.
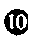 Une directive race n cond est remplacée par
   if (cond) _cfSET_RACE(x)
   où x code la famille n de déroulement d'execution.
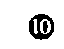 Une directive verify est remplacée par un test, spécifique au point de programme où elle figure, qui vérifie que la pile de balises correspond à un déroulement d'execution admissible, en tenant compte des familles activées.
   Cette vérification s'appuie notamment sur les données statiques calculées par le préprocesseur.
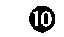 Les directives loop n sont utilisées par le précompilateur uniquement qui les retire après sont calcul.

Dans le cas de l'exemple proposé, les vérifications s'effectuent à la fin de la fonction f et dans la fonction action2. Les tableaux _fcPath0 et _fcPath1 définissent les déroulement d'execution admissibles. Il y a deux familles d'execution la premier est constituée de _fcPath0 et la seconde de _fcPath1. _fcPath0 correspond à l'execution qui ne passe pas par l'appel de action2(d); _fcPath1 correspond à l'execution qui passe par l'appel de action2(d).

Si une vérification échoue, cela indique que la pile représentant les balises successivement traversées ne concorde pas avec le graphe de flôt de contrôle du programme. On en déduit qu'une erreur a été injectée lors de l'execution.

Le procédé de sécurisation est remarquable en ce que l'on modifie les fonctions mises en oeuvres dans le calcul en y ajoutant en plusieurs endroits et ce de manière automatique :
1. Des informations statiques générées par le procédé automatique.
2. Une partie dynamique de la mémoire du système électronique allouée par le procédé automatique.
3.Des balises et des points de contrôles pour jalonner le code, introduits par le procédé automatique.
4. Des fonctions de balises stockant des informations dans la mémoire dynamique.
5. Des fonctions de vérification d'historique utilisant les informations statiques et la mémoire dynamique pour vérifier qu'aucune erreur n'a été introduite.

## Revendications

1. Procédé de sécurisation de l'exécution d'au moins un module dans une unité électronique comportant des moyens de traitement de l'information et des moyens de mémorisation d'informations **caractérisé en ce que**, durant l'exécution dudit module, il consiste, lors du passage par au moins une balise, à stocker une ou plusieurs informations sur une ou des caractéristiques de ladite balise et à vérifier, au moins en un point de contrôle, la consistance des informations stockées sur l'ensemble des balises rencontrées.

2. Procédé de sécurisation d'au moins un module destiné à être intégré dans une unité électronique comportant des moyens de traitement de l'information et des moyens de mémorisation d'informations **caractérisé en ce qu'**il intègre automatiquement audit module muni d'un ensemble de directives un ensemble de données statiques, de fonctions de balise et de fonctions de vérification, les premières représentant un ensemble de déroulements d'exécutions valides, les secondes calculant dynamiquement une représentation de l'exécution, et les dernières servant à vérifier la cohérence des données statiques et dynamiques.

3. Procédé selon la revendication 2, **caractérisé en ce qu'**il utilise le graphe de flot de contrôle du programme à protéger afin de générer les informations statiques utilisées par les fonctions de vérification.

4. Procédé selon la revendication 2 ou 3, **caractérisé en ce qu'**une balise est une information qui définit les caractéristiques du point de passage correspondant et/ou d'un ou plusieurs autres points de passage.

5. Procédé selon la revendication 4, **caractérisé en ce qu'**une balise est un des éléments suivants ou une combinaison de plusieurs ou de l'ensemble des éléments suivants :
- un nombre entier localisant la balise dans le code à protéger ;
- un booléen définissant s'il s'agit de la première ou de la dernière balise ;
- une structure de donnée caractérisant, en fonction de la valeur d'un registre ou d'une variable donnée, l'ensemble des balises dont on interdira (par une fonction de vérification) le passage dans la suite du déroulement de l'exécution ;
- une structure de donnée caractérisant, en fonction de la valeur d'un registre ou d'une variable donnée, l'ensemble des balises dont on forcera (par une fonction de vérification) le passage dans la suite du déroulement de l'exécution.

6. Procédé selon l'une des revendications 2 à 5, **caractérisé en ce qu'**une fonction de balise est une fonction qui sera appelée par le programme à chaque passage par une balise et qui consistera à stocker dynamiquement dans la mémoire partagée diverses informations concernant la balise.

7. Procédé selon la revendication 6, **caractérisé en ce qu'**une fonction de balise est une fonction qui empile la balise dans la mémoire partagée et/ou une fonction qui met à jour une somme de contrôle contenue dans la mémoire partagée avec des données de la balise.

8. Procédé selon l'une des revendications 2 à 7, **caractérisé en ce qu'**une fonction de vérification d'historique est une fonction appelée à chaque point de contrôle afin de vérifier la cohérence des informations stockées dans la mémoire partagée lors des appels successifs des fonctions de balises.

9. Unité électronique comportant des moyens de traitement de l'information et des moyens de mémorisation d'informations contenant au moins un module à exécuter **caractérisé en ce qu'**il comporte des moyens permettant durant l'exécution dudit module, et lors du passage par au moins une balise, à stocker une ou plusieurs informations sur une ou des caractéristiques de ladite balise dans lesdits moyens de mémorisation et des moyens permettant de vérifier, au moins en u n point d e contrôle, la consistance d es i nformations stockées s ur l'ensemble des balises rencontrées.

10. Programme comprenant des instructions de code de programme pour l'exécution des étapes du procédé selon l'une des revendications 1 à 6 lorsque ledit programme est exécuté dans une unité électronique.
